# EUROPEAN PATENT APPLICATION

(11) **EP 4 837 656 A1**
(43) Date of publication of application: **11.11.2026**
(21) Application number: 26175045.9
(22) Date of filing: 28.04.2026
(51) Int. Cl.: B01L 3/00, G01N 35/10

(54) **LIQUID PATH SYSTEM AND METHOD FOR CONTROLLING SAME**

(30) Priority: 07.05.2025 CN 202510585584
(71) Applicant: GeneMind Biosciences Company Limited, Shenzhen City, Guangdong 518023 (CN)
(72) Inventor: HAN, Xuchen, Shenzhen City, 518023 (CN); SHANG, Huan, Shenzhen City, 518023 (CN)
(74) Representative: Schiweck Weinzierl Koch Patentanwälte Partnerschaft mbB

(57) **Abstract**

The present disclosure discloses a liquid path system and a method for controlling the same. The liquid path system includes a pump and a flow path selection valve. The flow path selection valve includes a plurality of valve ports that are not capable of being communicated simultaneously, the plurality of valve ports are respectively configured to communicate different reagent kits with the pump, the plurality of valve ports at least include a first valve port and a second valve port, the first valve port is configured to communicate a first reagent kit with the pump, and the second valve port is configured to communicate a second reagent kit with the pump, where the first reagent kit is configured to store a first reagent, the second reagent kit is configured to store a second reagent, and the first reagent is different from the second reagent; the pump is configured to aspirate the first reagent and the second reagent from the first reagent kit and the second reagent kit respectively, mix the first reagent and the second reagent to form a mixed reagent, and move the mixed reagent in the first reagent kit or the second reagent kit to ensure uniform mixing. The first reagent and the second reagent are uniformly mixed, so that the function of the first reagent or the second reagent is fully realized, thereby improving the sequencing efficiency.

## Description

### TECHNICAL FIELD

The present disclosure relates to the field of fluid technologies, and in particular, to a liquid path system and a method for controlling the same.

### BACKGROUND

Various measurement schemes for biological or chemical research involve a large number of biochemical reactions. Biochemical reactions are usually performed using one or more reaction reagents and samples. However, some functions of the reaction reagents can only be realized after additives are added. In the related art, it is difficult to mix the reaction reagents and the additives uniformly.

### SUMMARY

The present disclosure provides a liquid path system and a method for controlling the same, so that reaction reagents and additives with different characteristics can be effectively mixed.

The liquid path system according to embodiments of the present disclosure includes a pump and a flow path selection valve. The flow path selection valve includes a plurality of valve ports that are not capable of being communicated simultaneously, the plurality of valve ports are respectively configured to communicate different reagent kits with the pump, the plurality of valve ports at least include a first valve port and a second valve port, the first valve port is configured to communicate a first reagent kit with the pump, and the second valve port is configured to communicate a second reagent kit with the pump, where the first reagent kit is configured to store a first reagent, the second reagent kit is configured to store a second reagent, and the first reagent is different from the second reagent; the pump is configured to aspirate the first reagent and the second reagent from the first reagent kit and the second reagent kit respectively, mix the first reagent and the second reagent to form a mixed reagent, and move the mixed reagent in the first reagent kit or the second reagent kit to ensure uniform mixing.

In the liquid path system according to the embodiments of the present disclosure, the first reagent and the second reagent are uniformly mixed by means of the liquid path system, so that the function of the first reagent or the second reagent can be fully realized, which facilitates the biochemical reaction, thereby improving the sequencing efficiency.

In some embodiments, the pump is configured to aspirate the first reagent and the second reagent from the first reagent kit and the second reagent kit respectively into the pump to form the mixed reagent, and to pump the mixed reagent into the first reagent kit or the second reagent kit.

In some embodiments, the volume of the first reagent in the first reagent kit is less than or equal to the volume of the first reagent required for a single biochemical reaction run, the volume of the second reagent in the second reagent kit is greater than or equal to the volume of the second reagent required for the single biochemical reaction run, and the pump is configured to pump the mixed reagent into the first reagent kit.

In some embodiments, the volume of the first reagent required for the single biochemical reaction run is 5 times or more the volume of the second reagent required.

In some embodiments, the pump is configured to aspirate a part of the first reagent from the first reagent kit into the pump, and the pump is further configured to aspirate all of the second reagent from the second reagent kit into the pump to form the mixed reagent, and to pump the mixed reagent back into the first reagent kit. In some embodiments, when the flow path selection valve communicates the first reagent kit with the pump, the pump is configured to aspirate the first reagent from the first reagent kit into the pump at a first speed; when the flow path selection valve communicates the second reagent kit with the pump, the pump is configured to aspirate the second reagent from the second reagent kit into the pump at a second speed, so that the first reagent and the second reagent are mixed to form the mixed reagent, the first speed being the same as or different from the second speed.

In some embodiments, the first reagent and the second reagent satisfy at least one of the following conditions:
a) the density of the first reagent is less than the density of the second reagent,
b) the viscosity of the first reagent is less than the viscosity of the second reagent, and
c) the diffusion coefficient of the first reagent is less than the diffusion coefficient of the second reagent, the second speed being less than the first speed.

In some embodiments, when the flow path selection valve communicates the first reagent kit with the pump, the pump is configured to pump the mixed reagent in the pump into the first reagent kit at a third speed.

In some embodiments, the liquid path system includes a first aspiration assembly and a second aspiration assembly in communication with the first valve port and the second valve port respectively. The first aspiration assembly is configured to aspirate the first reagent from the first reagent kit and return the mixed reagent to the first reagent kit via the first valve port, and the second aspiration assembly is configured to aspirate the second reagent from the second reagent kit.

In some embodiments, when the pump pumps the mixed reagent in the pump into the first reagent kit by means of the first aspiration assembly, the end part of the first aspiration assembly distal to the first valve port is above the liquid surface of the first reagent kit.

In some embodiments, when the pump pumps the mixed reagent in the pump into the first reagent kit by means of the first aspiration assembly, the end part of the first aspiration assembly distal to the first valve port pumps liquid multiple times at different liquid levels.

In some embodiments, the liquid level of the first reagent kit is H. When the pump pumps the mixed reagent in the pump into the first reagent kit by means of the first aspiration assembly, the end part of the first aspiration assembly distal to the first valve port pumps liquid at liquid levels of 0 to 1/3H, 1/3H to 2/3H, and 2/3H to H separately, and a liquid pumping height at the end part of the first aspiration assembly is not 0 during liquid pumping.

In some embodiments, when the flow path selection valve communicates the first reagent kit with the pump, the pump is configured to repeatedly aspirate the mixed reagent in the first reagent kit at a fourth speed and pump the mixed reagent back into the first reagent kit at a fifth speed.

In some embodiments, the plurality of valve ports further include a third valve port for communicating the external atmosphere with the pump, and the pump is further configured to aspirate air from the external atmosphere into the pump.

In some embodiments, the flow path selection valve is capable of selectively communicating the external atmosphere with the pump, and the pump is further configured to aspirate air from the external atmosphere and pump the air into the mixed reagent in the first reagent kit.

In some embodiments, when the flow path selection valve communicates the external atmosphere with the pump, the pump is configured to aspirate air from the external atmosphere and discharge the air from the pump before the first reagent and the second reagent are drawn.

In some embodiments, the liquid path system includes a waste liquid collection container in communication with the pump, where before the first reagent and the second reagent form the mixed reagent, the pump is configured to aspirate the first reagent from the first reagent kit and pump the first reagent into the waste liquid collection container, and is configured to aspirate the second reagent from the second reagent kit and pump the second reagent into the waste liquid collection container.

In some embodiments, the liquid path system includes a first conduit, a second conduit, a third conduit, a switching valve, and a reactor, the first conduit and the second conduit being both connected to the switching valve and the pump, the third conduit being connected to the flow path selection valve and the switching valve, the reactor being arranged on the second conduit, and the switching valve selectively communicating the third conduit with the first conduit or communicating the third conduit with the second conduit.

In some embodiments, when the flow path selection valve and the switching valve communicate the first reagent kit with the pump, the pump is configured to aspirate the mixed reagent from the first reagent kit into the reactor.

In some embodiments, the switching valve includes a first port, a second port, and a third port, the first port being configured to be in communication with the third conduit, the second port being configured to be in communication with the first conduit, the third port being configured to be in communication with the second conduit, and the first port being selectively in communication with the second port and the third port.

A method for controlling liquid flow in a liquid path system according to the embodiments of the present disclosure includes:
using a pump to aspirate a first reagent and a second reagent from a first reagent kit and a second reagent kit respectively and mix the first reagent and the second reagent to form a mixed reagent; and
using the pump to move the mixed reagent in the first reagent kit or the second reagent kit to ensure mixing.

In some embodiments, using the pump to aspirate the first reagent and the second reagent from the first reagent kit and the second reagent kit respectively and mix the first reagent and the second reagent to form the mixed reagent includes:
using the pump to aspirate the first reagent and the second reagent from the first reagent kit and the second reagent kit respectively into the pump to form the mixed reagent; and
using the pump to pump the mixed reagent into the first reagent kit or the second reagent kit.

In some embodiments, the method includes:
when the flow path selection valve communicates the external atmosphere with the pump, using the pump to aspirate air from the external atmosphere and discharge the air from the pump before the first reagent and the second reagent are aspirated.

In some embodiments, the method includes:
using the pump to aspirate the first reagent from the first reagent kit and pump the first reagent into the waste liquid collection container before the first reagent and the second reagent form the mixed reagent; and
using the pump to aspirate the second reagent from the second reagent kit and pump the second reagent into the waste liquid collection container.

In some embodiments, using the pump to aspirate the first reagent and the second reagent from the first reagent kit and the second reagent kit respectively into the pump to form the mixed reagent includes:
using the pump to aspirate the first reagent from the first reagent kit into the pump at a first speed when the flow path selection valve communicates the first reagent kit with the pump; and
using the pump to aspirate the second reagent from the second reagent kit into the pump at a second speed when the flow path selection valve communicates the second reagent kit with the pump, so that the first reagent and the second reagent are mixed to form the mixed reagent, the first speed being the same as or different from the second speed.

In some embodiments, using the pump to pump the mixed reagent into the first reagent kit or the second reagent kit includes:
using the pump to pump the mixed reagent into the first reagent kit.

In some embodiments, using the pump to aspirate the first reagent and the second reagent from the first reagent kit and the second reagent kit respectively into the pump to form the mixed reagent includes:
first, using the pump to aspirate a part of the first reagent from the first reagent kit into the pump; and
then, using the pump to aspirate all of the second reagent from the second reagent kit into the pump.

In some embodiments, using the pump to pump the mixed reagent into the first reagent kit or the second reagent kit includes:
using the pump to pump the mixed reagent in the pump into the first reagent kit at a third speed when the flow path selection valve communicates the first reagent kit with the pump; or
using the pump to pump the mixed reagent in the pump into the second reagent kit at a third speed when the flow path selection valve communicates the second reagent kit with the pump.

In some embodiments, using the pump to move the mixed reagent in the first reagent kit or the second reagent kit to ensure mixing includes:
using the pump to repeatedly aspirate the mixed reagent in the first reagent kit or the second reagent kit at a fourth speed and pump the mixed reagent back into the first reagent kit or the second reagent kit at a fifth speed when the flow path selection valve communicates the first reagent kit with the pump or the second reagent kit with the pump.

In some embodiments, using the pump to aspirate the first reagent and the second reagent from the first reagent kit and the second reagent kit respectively includes:
using the pump to aspirate the first reagent from the first reagent kit by means of the first aspiration assembly, and
using the pump to aspirate the second reagent from the second reagent kit by means of the second aspiration assembly;
using the pump to move the mixed reagent in the first reagent kit or the second reagent kit to ensure mixing includes:
   using the pump to move the mixed reagent in the first reagent kit by means of the first aspiration assembly to ensure mixing, or
   using the pump to move the mixed reagent in the second reagent kit by means of the second aspiration assembly to ensure mixing.

In some embodiments, using the pump to pump the mixed reagent into the first reagent kit or the second reagent kit includes:
using the pump to pump the mixed reagent in the pump into the first reagent kit by means of a first aspiration assembly, the end part of the first aspiration assembly distal to the first valve port being above the liquid surface of the first reagent kit.

In some embodiments, using the pump to pump the mixed reagent in the pump into the first reagent kit at the third speed includes:
pumping liquid multiple times at different liquid levels by the end part of the first aspiration assembly distal to the first valve port when the pump pumps the mixed reagent in the pump into the first reagent kit by means of the first aspiration assembly.

In some embodiments, using the pump to pump the mixed reagent in the pump into the first reagent kit at the third speed includes:
in the case of the liquid level of the first reagent kit being H, using the pump to pump the mixed reagent in the pump into the first reagent kit by means of the first aspiration assembly when the end part of the first aspiration assembly distal to the first valve port is positioned at liquid levels of 0 to 1/3H, 1/3H to 2/3H, and 2/3H to H separately, a liquid pumping height at the end part of the first aspiration assembly being not 0 during liquid pumping.

In some embodiments, using the pump to move the mixed reagent in the first reagent kit or the second reagent kit to ensure mixing includes:
using the pump to aspirate air from the external atmosphere and pump the air into the mixed reagent in the first reagent kit or the second reagent kit.

In some embodiments, the method includes:
using the pump to aspirate the mixed reagent from the first reagent kit into the reactor when the flow path selection valve and the switching valve communicate the first reagent kit with the pump.

Additional aspects and advantages of the present disclosure will in part be illustrated in the following description and become apparent from the following description, or may be learned by the implementation of the present disclosure.

### BRIEF DESCRIPTION OF THE DRAWINGS

The aforementioned and/or additional aspects and advantages of the present disclosure will become apparent and easily understood from the description of embodiments with reference to the following drawings, in which:
FIG. 1 is a schematic structural view of a liquid path system according to an embodiment of the present disclosure;
FIG. 2 is a schematic structural view of a liquid path system according to another embodiment of the present disclosure;
FIG. 3 is a schematic flowchart of a method according to an embodiment of the present disclosure;
FIG. 4 is a schematic flowchart of a method according to an embodiment of the present disclosure;
FIG. 5 is a schematic flowchart of a method according to another embodiment of the present disclosure; and
FIG. 6 is a schematic flowchart of a method according to yet another embodiment of the present disclosure.

Description of reference numerals: 100, liquid path system; 10, pump; 20, flow path selection valve; 21, first valve port; 22, second valve port; 23, common valve port; 24, third valve port; 31, first reagent kit; 32, second reagent kit; 41, first aspiration assembly; 42, second aspiration assembly; 50, waste liquid collection container; 60, first conduit; 61, second conduit; 62, third conduit; 70, switching valve; 71, first port; 72, second port; 73, third port; 80, reactor; 81, fluid channel.

### DETAILED DESCRIPTION

Embodiments of the present disclosure are described in detail below, and the examples of the embodiments are shown in the drawings, throughout which identical or similar reference numerals represent identical or similar elements or elements having identical or similar functionality. The embodiments described below with reference to the drawings are exemplary and are merely intended to illustrate the present disclosure, and should not be construed as limiting the present disclosure.

In the description of the present disclosure, it should be understood that orientational or positional relationships indicated by terms such as "central", "longitudinal", "transverse", "length", "width", "thickness", "upper", "lower", "front", "rear", "left", "right", "vertical", "horizontal", "top", "bottom", "inner", "outer", "clockwise", or "counterclockwise", are those shown on the basis of the drawings, and are merely intended to facilitate and simplify the description rather than indicate or imply that the indicated device or element must have a specific orientation and be configured and operated according to the specific orientation. Such relationships should not be construed as limiting the present disclosure. In addition, the terms "first" and "second" are used herein for descriptive purposes only and should not be construed as indicating or implying relative importance or implicitly indicating the number of technical features described. Therefore, features defined with "first" and "second" may explicitly or implicitly include one or more of the features. In the description of the present disclosure, unless otherwise clearly and specifically defined, the term "plurality" means two or more.

In the description of the present disclosure, it should be noted that unless otherwise clearly specified and defined, the terms "mount", "link", and "connect" should be interpreted in their broad sense. For example, the connection may be a fixed connection, detachable connection, or integral connection; a mechanical connection, electric connection, or communicative connection; or a direct connection, indirect connection through an intermediate, internal communication of two elements, or interaction between two elements. For those of ordinary skill in the art, the specific meanings of the aforementioned terms in the present disclosure can be interpreted according to specific conditions.

In the present disclosure, unless otherwise clearly specified and defined, a first feature being "above" or "below" a second feature may include that the first and second features are in direct contact and that the first and second features are not in direct contact but are in contact via an additional feature therebetween. Moreover, a first feature being "on", "over", and "above" a second feature includes that the first feature is right above or obliquely above the second feature, or simply means that the first feature is at a vertically higher position than the second feature. A first feature being "under", "beneath", and "below" a second feature includes that the first feature is right below or obliquely below the second feature, or simply means that the first feature is at a vertically lower position than the second feature.

The following disclosure provides many different embodiments or examples for implementing different structures of the present disclosure. To simplify the disclosure of the present disclosure, the components and settings of specific examples are described below. Certainly, the examples are merely exemplary and are not intended to limit the present disclosure. In addition, reference numerals and/or characters may be repeatedly used in different examples in the present disclosure for simplicity and clarity rather than to indicate the relationship between various embodiments and/or settings discussed. In addition, the present disclosure provides examples of various specific processes and materials, but those of ordinary skill in the art will recognize the application of other processes and/or the use of other materials.

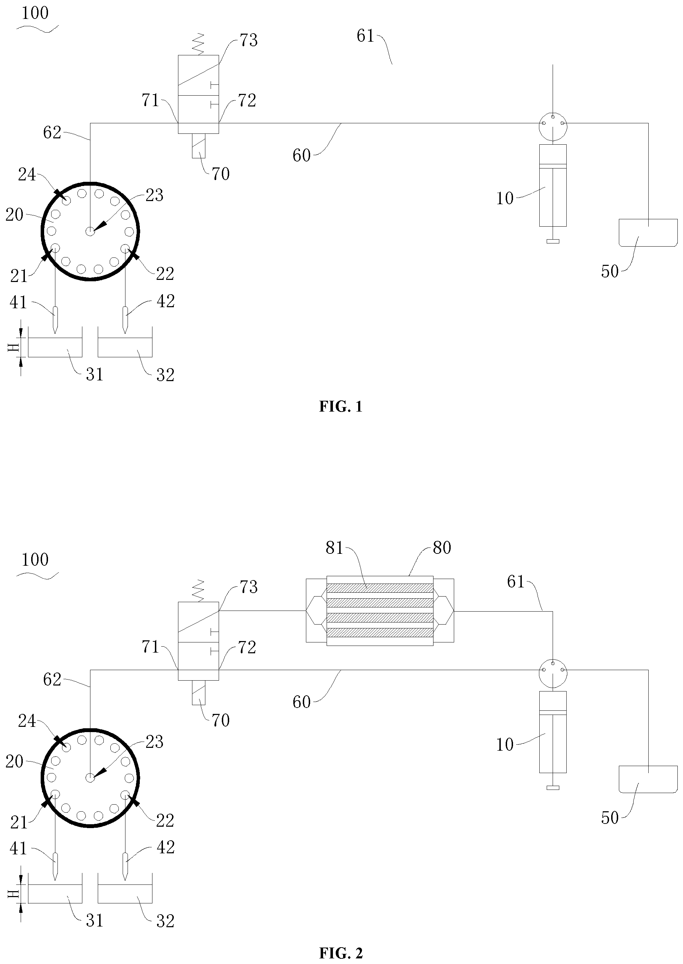

Referring to FIG. 1, a liquid path system 100 according to embodiments of the present disclosure includes a pump 10 and a flow path selection valve 20. The flow path selection valve 20 includes a plurality of valve ports that are not capable of being communicated simultaneously, the plurality of valve ports are respectively configured to communicate different reagent kits with the pump 10, the plurality of valve ports at least include a first valve port 21 and a second valve port 22, the first valve port 21 is configured to communicate a first reagent kit 31 with the pump 10, and the second valve port 22 is configured to communicate a second reagent kit 32 with the pump 10, where the first reagent kit 31 is configured to store a first reagent, the second reagent kit 32 is configured to store a second reagent, and the first reagent is different from the second reagent; the pump 10 is configured to aspirate the first reagent and the second reagent from the first reagent kit 31 and the second reagent kit 32 respectively, mix the first reagent and the second reagent to form a mixed reagent, and move the mixed reagent in the first reagent kit 31 or the second reagent kit 32 to ensure uniform mixing.

In the liquid path system 100 according to the embodiments of the present disclosure, the first reagent and the second reagent are uniformly mixed by means of the liquid path system 100, so that the function of the first reagent or the second reagent can be fully realized, which facilitates the biochemical reaction, thereby improving the sequencing efficiency.

Specifically, the pump 10 is a machine that conveys or pressurizes a fluid. The pump 10 may be a peristaltic pump, a plunger pump, a syringe pump, a gear pump, a diaphragm pump, and the like. The pump 10 can provide both negative pressure and positive pressure.

The flow path selection valve 20 includes a common valve port 23, the common valve port 23 may be in communication with the pump 10 by means of a conduit, and the common valve port 23 is selectively in communication with the first valve port 21 and the second valve port 22. When the first valve port 21 is in communication with the common valve port 23, the first reagent kit 31 is in communication with the pump 10 by means of the flow path selection valve 20, and the pump 10 can aspirate the first reagent from the first reagent kit 31. When the second valve port 22 is in communication with the common valve port 23, the second reagent kit 32 is in communication with the pump 10 by means of the flow path selection valve 20, and the pump 10 can aspirate the second reagent from the second reagent kit 32.

One of the first reagent and the second reagent may be a reaction reagent, and the other may be an additive. In some embodiments, the pump 10 is configured to aspirate the first reagent and the second reagent from the first reagent kit 31 and the second reagent kit 32 respectively into the pump 10 to form the mixed reagent, and to pump the mixed reagent into the first reagent kit 31 or the second reagent kit 32.

Specifically, the pump 10 may first aspirate the first reagent from the first reagent kit 31 into the pump 10, and then aspirate the second reagent from the second reagent kit 32 into the pump 10; or the pump 10 may first aspirate the second reagent from the second reagent kit 32 into the pump 10, and then aspirate the first reagent from the first reagent kit 31 into the pump 10.

In some embodiments, the volume of the first reagent in the first reagent kit 31 is less than or equal to the volume of the first reagent required for a single biochemical reaction run, the volume of the second reagent in the second reagent kit 32 is greater than or equal to the volume of the second reagent required for the single biochemical reaction run, and the pump 10 is configured to pump the mixed reagent into the first reagent kit 31. Illustratively, the first reagent is a reaction reagent, and the second reagent is an additive. It should be understood that there may be multiple cycles of biochemical reactions or multiple biochemical reactions in the reaction vessel. For example, each base in the nucleic acid template needs to be identified during nucleic acid sequencing, and therefore, multiple cycles of repeated biochemical reactions need to be performed. Therefore, in the embodiments of the present disclosure, "a single biochemical reaction run" refers to individually performing a biochemical reaction once or for one cycle. Therefore, the volume required for the single biochemical reaction run refers to the volume required to complete the biochemical reaction once or for one cycle.

The first reagent in the first reagent kit 31 can be used for a single biochemical reaction run, and the second reagent in the second reagent kit 32 can be used for multiple biochemical reaction runs. The mixed reagent is pumped into the first reagent kit 31, so that the reagent in the first reagent kit 31 can all be used for a single biochemical reaction run, which facilitates the control of the amount of the reagent.

In some embodiments, the volume of the first reagent required for the single biochemical reaction run is 5 times or more the volume of the second reagent required.

Since the amount of the reaction reagent required for a single biochemical reaction run is greater than the amount of the additive required, the first reagent is the reaction reagent and the second reagent is the additive. Exemplarily, the volume of the second reagent required for a single biochemical reaction run is 20 µL, and the volume of the first reagent required for a single biochemical reaction run is 100 µL, 200 µL, 300 µL, etc. In some embodiments, the pump 10 is configured to aspirate a part of the first reagent from the first reagent kit 31 into the pump 10, and the pump 10 is further configured to aspirate all of the second reagent from the second reagent kit 32 into the pump 10 to form the mixed reagent, and to pump the mixed reagent back into the first reagent kit 31.

The pump 10 aspirating the part of the first reagent from the first reagent kit 31 into the pump 10 means that the pump 10 aspirates a part of the first reagent required for a single biochemical reaction run from the first reagent kit 31. Exemplarily, the pump 10 aspirates 1/2, 1/3, 2/3, 1/4, 3/4, etc. of the first reagent required for a single biochemical reaction run from the first reagent kit 31. The pump 10 aspirating all of the second reagent from the second reagent kit 32 into the pump 10 to form the mixed reagent means that the pump 10 aspirates all of the second reagent required for a single biochemical reaction run from the second reagent kit 32. The amount of the first reagent and the second reagent aspirated may be controlled by the pump 10. When the viscosity of the second reagent is relatively high, a part of the first reagent and all of the second reagent are mixed in the pump 10 to form the mixed reagent, which can improve the aspiration accuracy of the second reagent. At the same time, the first reagent can dilute the second reagent to reduce the concentration of the second reagent, which is conducive to the uniform mixing of the first reagent and the second reagent.

In some embodiments, when the flow path selection valve 20 communicates the first reagent kit 31 with the pump 10, the pump 10 is configured to aspirate the first reagent from the first reagent kit 31 into the pump 10 at a first speed; when the flow path selection valve 20 communicates the second reagent kit 32 with the pump 10, the pump 10 is configured to aspirate the second reagent from the second reagent kit 32 into the pump 10 at a second speed, so that the first reagent and the second reagent are mixed to form the mixed reagent, the first speed being the same as or different from the second speed.

The first speed may be greater than, equal to, or less than the second speed. The first speed and the second speed may be adjusted based on physical and chemical properties of the first reagent and the second reagent. In some embodiments, the first reagent and the second reagent satisfy at least one of the following conditions:
a) the density of the first reagent is less than the density of the second reagent,
b) the viscosity of the first reagent is less than the viscosity of the second reagent, and
c) the diffusion coefficient of the first reagent is less than the diffusion coefficient of the second reagent, the second speed being less than the first speed.

When the density, the viscosity, and the diffusion coefficient of the second reagent are greater than those of the first reagent, the aspiration speed of the second reagent is less than that of the first reagent, so that the second reagent can be reduced from being deposited on the bottom of the pump 10, and the uniformity of the first reagent and the second reagent can be improved.

The difference between the first speed and the second speed can be adjusted based on the number of the above conditions satisfied by the first reagent and the second reagent. When the first reagent and the second reagent satisfy one of the above conditions, the second speed is slightly less than the first speed; when the first reagent and the second reagent satisfy the above three conditions, the second speed is much less than the first speed. In some embodiments, when the flow path selection valve 20 communicates the first reagent kit 31 with the pump 10, the pump 10 is configured to pump the mixed reagent in the pump 10 into the first reagent kit 31 at a third speed.

The third speed may be adjusted based on physical and chemical properties of the mixed reagent and the first reagent. The third speed may be the same as the first speed, or may be the same as the second speed, or may be different from both the first speed and the second speed. Exemplarily, the third speed may be between the first speed and the second speed, or may be greater than a larger value of the first speed and the second speed, or may be less than a smaller value of the first speed and the second speed.

The mixed reagent in the pump 10 is pumped into the first reagent kit 31, so that the mixed reagent can be mixed with the first reagent in the first reagent kit 31, and thus the reagent in the first reagent kit 31 can be sufficient for a single biochemical reaction run.

Referring to FIG. 1, in some embodiments, the liquid path system 100 includes a first aspiration assembly 41 and a second aspiration assembly 42 in communication with the first valve port 21 and the second valve port 22 respectively. The first aspiration assembly 41 is configured to aspirate the first reagent from the first reagent kit 31 and return the mixed reagent to the first reagent kit 31 via the first valve port 21, and the second aspiration assembly 42 is configured to aspirate the second reagent from the second reagent kit 32.

The first valve port 21 may be in communication with the first aspiration assembly 41 by means of a conduit, and the second valve port 22 may be in communication with the second aspiration assembly 42 by means of a conduit. The first aspiration assembly 41 and the second aspiration assembly 42 may be pipettes made of the same material or different materials. That is, the first aspiration assembly 41 and the second aspiration assembly 42 may be selected based on physical and chemical properties of the first reagent and the second reagent and the like.

In some embodiments, when the pump 10 pumps the mixed reagent in the pump 10 into the first reagent kit 31 by means of the first aspiration assembly 41, the end part of the first aspiration assembly 41 distal to the first valve port 21 is above the liquid surface of the first reagent kit 31.

In this way, the mixed reagent can diffuse downward from above the liquid surface of the first reagent kit 31 under the action of gravity, thereby increasing the movement speed of the mixed reagent, so that the mixed reagent is uniformly mixed with the first reagent in the first reagent kit 31.

In some embodiments, when the pump 10 pumps the mixed reagent in the pump 10 into the first reagent kit 31 by means of the first aspiration assembly 41, the end part of the first aspiration assembly 41 distal to the first valve port 21 pumps liquid multiple times at different liquid levels.

This is conducive to improving the diffusion capacity of the mixed reagent in the first reagent kit 31, so that the mixed reagent is uniformly mixed with the first reagent in the first reagent kit 31.

In some embodiments, the liquid level of the first reagent kit 31 is H. When the pump 10 pumps the mixed reagent in the pump 10 into the first reagent kit 31 by means of the first aspiration assembly 41, the end part of the first aspiration assembly 41 distal to the first valve port 21 pumps liquid at liquid levels of 0 to 1/3H, 1/3H to 2/3H, and 2/3H to H separately, and a liquid pumping height at the end part of the first aspiration assembly 41 is not 0 during liquid pumping.

Exemplarily, the first aspiration assembly 41 first pumps liquid with the end part at a liquid level of 1/6H, then pumps liquid with the end part at a liquid level of 1/2H, and finally pumps liquid with the end part at a liquid level of 5/6H. Alternatively, the first aspiration assembly 41 first pumps liquid with the end part at a liquid level of 5/6H, then pumps liquid with the end part at a liquid level of 1/2H, and finally pumps liquid with the end part at a liquid level of 1/6H.

In some embodiments, when the flow path selection valve 20 communicates the first reagent kit 31 with the pump 10, the pump 10 is configured to repeatedly aspirate the mixed reagent in the first reagent kit 31 at a fourth speed and pump the mixed reagent back into the first reagent kit 31 at a fifth speed.

The fourth speed and the fifth speed may be the same or may be different. When the mixed reagent in the first reagent kit 31 is repeatedly aspirated, the fourth speed may be the same or different. Exemplarily, when the mixed reagent in the first reagent kit 31 is aspirated for the first time, the fourth speed is S1, and when the mixed reagent in the first reagent kit 31 is aspirated for the second time, the fourth speed is S1 or S2, S1 being different from S2. Similarly, when the mixed reagent is repeatedly pumped into the first reagent kit 31, the fifth speed may be the same or different. Exemplarily, when the mixed reagent is pumped into the first reagent kit 31 for the first time, the fifth speed is S3, and when the mixed reagent is pumped into the first reagent kit 31 for the second time, the fifth speed is S3 or S4, S3 being different from S4.

Referring to FIG. 1, in some embodiments, the plurality of valve ports further include a third valve port 24 for communicating the external atmosphere with the pump 10, and the pump 10 is further configured to aspirate air from the external atmosphere into the pump 10.

The first valve port 21, the second valve port 22, and the third valve port 24 may be spaced apart in the circumferential direction of the flow path selection valve 20, and the common valve port 23 is selectively in communication with the first valve port 21, the second valve port 22, and the third valve port 24, so that the pump 10 is selectively in communication with the first aspiration assembly 41, the second aspiration assembly 42, and the external atmosphere.

In some embodiments, the flow path selection valve 20 is capable of selectively communicating the external atmosphere with the pump 10, and the pump 10 is further configured to aspirate air from the external atmosphere and pump the air into the mixed reagent in the first reagent kit 31.

By pumping air into the first reagent kit 31, the movement of the mixed reagent in the first reagent kit 31 can be accelerated to uniformly mix the first reagent and the second reagent.

In some embodiments, when the flow path selection valve 20 communicates the external atmosphere with the pump 10, the pump 10 is configured to aspirate air from the external atmosphere and discharge the air from the pump 10 before the first reagent and the second reagent are drawn.

In this way, the liquid path system 100 can be detected and unblocked in advance, reducing the impact of conduit blockage on the delivery of the first reagent and the second reagent, thereby reducing the impact on the biochemical reaction.

Referring to FIG. 1, in some embodiments, the liquid path system 100 includes a waste liquid collection container 50 in communication with the pump 10. Before the first reagent and the second reagent form the mixed reagent, the pump 10 is configured to aspirate the first reagent from the first reagent kit 31 and pump the first reagent into the waste liquid collection container 50, and is configured to aspirate the second reagent from the second reagent kit 32 and pump the second reagent into the waste liquid collection container 50.

In this way, the conduit between the first reagent kit 31 and the pump 10 and the conduit between the second reagent kit 32 and the pump 10 can be cleaned to reduce the contamination of the reagent required for the next biochemical reaction by the residual reagent from the last biochemical reaction, thereby reducing the impact of the last biochemical reaction on the next biochemical reaction.

Meanwhile, the waste liquid collection container 50 may also store and discharge the waste liquid generated after the biochemical reaction. The waste liquid collection container 50 may be in communication with the pump 10 by means of a conduit.

Referring to FIG. 2, in some embodiments, the liquid path system 100 includes a first conduit 60, a second conduit 61, a third conduit 62, a switching valve 70, and a reactor 80. The first conduit 60 and the second conduit 61 are both connected to the switching valve 70 and the pump 10, the third conduit 62 is connected to the flow path selection valve 20 and the switching valve 70, the reactor 80 is arranged on the second conduit 61, and the switching valve 70 selectively communicates the third conduit 62 with the first conduit 60 or communicates the third conduit 62 with the second conduit 61.

When the switching valve 70 communicates the third conduit 62 with the first conduit 60, the first reagent can enter the pump 10 from the first reagent kit 31, the second reagent can enter the pump 10 from the second reagent kit 32, and the mixed reagent can enter the first reagent kit 31 from the pump 10.

When the switching valve 70 communicates the third conduit 62 with the second conduit 61, the mixed reagent in the first reagent kit 31 can enter the reactor 80 from the first reagent kit 31. When the first reagent and the second reagent do not need to be uniformly mixed, the first reagent can directly enter the reactor 80 from the first reagent kit 31, and the second reagent can directly enter the reactor 80 from the second reagent kit 32.

The reactor 80 is configured to provide a place for biochemical reactions, and the reactor 80 may be a flow cell, which may also be referred to as a chip. The reactor 80 includes a fluid channel 81, and the fluid channel 81 is provided with a space for accommodating a liquid and can accommodate a sample under test and a reagent, thereby allowing the sample under test to undergo a biochemical reaction with the reagent.

In some embodiments, when the flow path selection valve 20 and the switching valve 70 communicate the first reagent kit 31 with the pump 10, the pump 10 is configured to aspirate the mixed reagent from the first reagent kit 31 into the reactor 80.

When the flow path selection valve 20 communicates the first aspiration assembly 41 with the switching valve 70, and the switching valve 70 communicates the third conduit 62 with the second conduit 61, the pump 10 is configured to aspirate all of the mixed reagent from the first reagent kit 31 into the reactor 80.

In this way, the first reagent and the second reagent can be uniformly mixed without passing through the reactor 80 and the second conduit 61, and the first reagent and the second reagent can enter the reactor 80 for biochemical reactions after being uniformly mixed, thereby reducing the risk of the performance of the first reagent being weakened due to the consumption of components or long-term exposure to the air after the first reagent and the second reagent are uniformly mixed.

Referring to FIG. 2, in some embodiments, the switching valve 70 includes a first port 71, a second port 72, and a third port 73. The first port 71 is configured to be in communication with the third conduit 62, the second port 72 is configured to be in communication with the first conduit 60, the third port 73 is configured to be in communication with the second conduit 61, and the first port 71 is selectively in communication with the second port 72 and the third port 73.

When the first port 71 is in communication with the second port 72, the third conduit 62 is in communication with the first conduit 60, so that the first reagent flows in the first reagent kit 31 and the pump 10, and the second reagent flows in the second reagent kit 32 and the pump 10. When the first port 71 is in communication with the third port 73, the third conduit 62 is in communication with the second conduit 61, so that the mixed reagent in the first reagent kit 31 flows into the reactor 80.

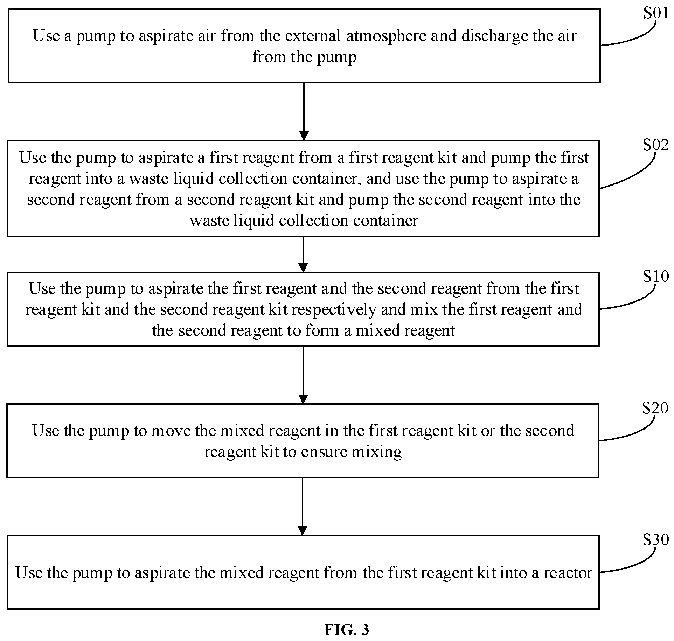

Referring to FIG. 3, a method for controlling liquid flow in a liquid path system 100 according to the embodiments of the present disclosure includes:
S10: using the pump 10 to aspirate a first reagent and a second reagent from a first reagent kit 31 and a second reagent kit 32 respectively and mix the first reagent and the second reagent to form a mixed reagent;
S20: using the pump 10 to move the mixed reagent in the first reagent kit 31 or the second reagent kit 32 to ensure mixing.

The pump 10 may aspirate a part of or all of the first reagent required for a single biochemical reaction run from the first reagent kit 31, and the pump 10 may also aspirate a part of or all of the second reagent required for the single biochemical reaction run from the second reagent kit 32. The first reagent and the second reagent may be preliminarily mixed in the pump 10 due to their own gravity, density, viscosity, and the like.

The mixed reagent moving in the first reagent kit 31 or the second reagent kit 32 to be mixed may be that the first reagent and the second reagent forming the mixed reagent move in the first reagent kit 31 or the second reagent kit 32 to be mixed, or the first reagent and the second reagent forming the mixed reagent move in the first reagent kit 31 or the second reagent kit 32 with the first reagent in the first reagent kit 31 or the second reagent in the second reagent kit 32 to be mixed.

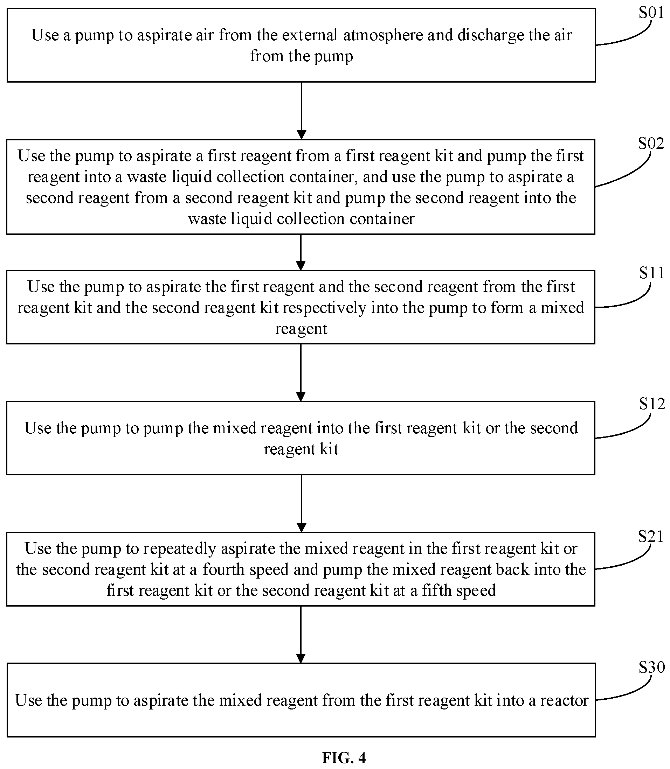

Referring to FIG. 4, in some embodiments, using the pump 10 to aspirate the first reagent and the second reagent from the first reagent kit 31 and the second reagent kit 32 respectively and mix the first reagent and the second reagent to form the mixed reagent (step S10) includes:
S11: using the pump 10 to aspirate the first reagent and the second reagent from the first reagent kit 31 and the second reagent kit 32 respectively into the pump 10 to form the mixed reagent;
S12: using the pump 10 to pump the mixed reagent into the first reagent kit 31 or the second reagent kit 32. When the volume of the first reagent in the first reagent kit 31 is less than or equal to the volume of the first reagent required for a single biochemical reaction run before the first reagent is aspirated, and the volume of the second reagent in the second reagent kit 32 is greater than or equal to the volume of the second reagent required for the single biochemical reaction run before the second reagent is aspirated, the mixed reagent may be pumped into the first reagent kit 31.

When the volume of the first reagent in the first reagent kit 31 is greater than or equal to the volume of the first reagent required for a single biochemical reaction run before the first reagent is aspirated, and the volume of the second reagent in the second reagent kit 32 is less than or equal to the volume of the second reagent required for the single biochemical reaction run before the second reagent is aspirated, the mixed reagent may be pumped into the second reagent kit 32.

When the volume of the first reagent in the first reagent kit 31 is less than or equal to the volume of the first reagent required for a single biochemical reaction run before the first reagent is aspirated, and the volume of the second reagent in the second reagent kit 32 is less than or equal to the volume of the second reagent required for the single biochemical reaction run before the second reagent is aspirated, the mixed reagent may be pumped into the first reagent kit 31 or the second reagent kit 32.

Referring to FIG. 3, in some embodiments, the method includes:
S01: when the flow path selection valve 20 communicates the external atmosphere with the pump 10, using the pump 10 to aspirate air from the external atmosphere and discharge the air from the pump 10 before the first reagent and the second reagent are aspirated.

First, the common valve port 23 may be controlled to be in communication with the third valve port 24 to allow the external atmosphere to be in communication with the pump 10, and then the pump 10 is controlled to aspirate air from the external atmosphere. The aspiration speed and amount of the air may be controlled by the pump 10.

Referring to FIG. 3, in some embodiments, the method includes:
S02: before the first reagent and the second reagent form the mixed reagent, using the pump 10 to aspirate the first reagent from the first reagent kit 31 and pump the first reagent into the waste liquid collection container 50;
using the pump 10 to aspirate the second reagent from the second reagent kit 32 and pump the second reagent into the waste liquid collection container 50.

First, the pump 10 may be used to aspirate air from the external atmosphere, and the air may be discharged from the pump 10, followed by standing for several seconds to release the conduit pressure; then, the pump 10 may be used to aspirate the first reagent and the second reagent from the first reagent kit 31 and the second reagent kit 32 and pump the first reagent and the second reagent into the waste liquid collection container 50.

First, the pump 10 may be used to aspirate the first reagent from the first reagent kit 31 and pump the first reagent into the waste liquid collection container 50; then, the pump 10 may be used to aspirate the second reagent from the second reagent kit 32 and pump the second reagent into the waste liquid collection container 50. Alternatively, first, the pump 10 may be used to aspirate the second reagent from the second reagent kit 32 and pump the second reagent into the waste liquid collection container 50; then, the pump 10 may be used to aspirate the first reagent from the first reagent kit 31 and pump the first reagent into the waste liquid collection container 50.

In some embodiments, using the pump 10 to aspirate the first reagent and the second reagent from the first reagent kit 31 and the second reagent kit 32 respectively into the pump 10 to form the mixed reagent (step S11) includes:
when the flow path selection valve 20 communicates the first reagent kit 31 with the pump 10, using the pump 10 to aspirate the first reagent from the first reagent kit 31 into the pump 10 at a first speed;
when the flow path selection valve 20 communicates the second reagent kit 32 with the pump 10, using the pump 10 to aspirate the second reagent from the second reagent kit 32 into the pump 10 at a second speed, so that the first reagent and the second reagent are mixed to form the mixed reagent, the first speed being the same as or different from the second speed.

The first reagent kit 31 being in communication with the pump 10 means that the common valve port 23 is in communication with the first valve port 21, so that the first aspiration assembly 41 is in communication with the pump 10 by means of the flow path selection valve 20, and the end part of the first aspiration assembly 41 distal to the first valve port 21 is in the first reagent kit 31. Similarly, the second reagent kit 32 being in communication with the pump 10 means that the common valve port 23 is in communication with the second valve port 22, so that the second aspiration assembly 42 is in communication with the pump 10 by means of the flow path selection valve 20, and the end part of the second aspiration assembly 42 distal to the second valve port 22 is in the second reagent kit 32.

In some embodiments, using the pump 10 to pump the mixed reagent into the first reagent kit 31 or the second reagent kit 32 (step S12) includes:
using the pump 10 to pump the mixed reagent into the first reagent kit 31.

When the mixed reagent is pumped into the first reagent kit 31, the first reagent kit 31 may store the first reagent therein or may be empty. Exemplarily, when the volume of the first reagent for forming the mixed reagent is less than the volume of the first reagent required for a single biochemical reaction run, the first reagent kit 31 may store the first reagent therein. When the volume of the first reagent for forming the mixed reagent is equal to the volume of the first reagent required for a single biochemical reaction run, the first reagent kit 31 may be empty.

In some embodiments, using the pump 10 to aspirate the first reagent and the second reagent from the first reagent kit 31 and the second reagent kit 32 respectively into the pump 10 to form the mixed reagent (step S11) includes:
first, using the pump 10 to aspirate a part of the first reagent from the first reagent kit 31 into the pump 10; and
then, using the pump 10 to aspirate all of the second reagent from the second reagent kit 32 into the pump 10. First, the common valve port 23 may be controlled to be in communication with the first valve port 21 to allow the first reagent kit 31 to be in communication with the pump 10; then, the pump 10 is controlled to aspirate a part of the first reagent from the first reagent kit 31 into the pump 10, followed by standing for several seconds; next, the common valve port 23 is controlled to be in communication with the second valve port 22 to allow the second reagent kit 32 to be in communication with the pump 10; finally, the pump 10 is controlled to aspirate all of the second reagent from the second reagent kit 32 into the pump 10.

In some embodiments, using the pump 10 to pump the mixed reagent into the first reagent kit 31 or the second reagent kit 32 (step S12) includes:
when the flow path selection valve 20 communicates the first reagent kit 31 with the pump 10, using the pump 10 to pump the mixed reagent in the pump 10 into the first reagent kit 31 at a third speed; or
when the flow path selection valve 20 communicates the second reagent kit 32 with the pump 10, using the pump 10 to pump the mixed reagent in the pump 10 into the second reagent kit 32 at the third speed.

First, the common valve port 23 may be controlled to be in communication with the first valve port 21 to allow the first reagent kit 31 to be in communication with the pump 10; then, the pump 10 may be controlled to pump the mixed reagent in the pump 10 into the first reagent kit 31 at the third speed. Alternatively, first, the common valve port 23 may be controlled to be in communication with the second valve port 22 to allow the second reagent kit 32 to be in communication with the pump 10; then, the pump 10 may be controlled to pump the mixed reagent in the pump 10 into the second reagent kit 32 at the third speed.

Referring to FIG. 4, in some embodiments, using the pump 10 to move the mixed reagent in the first reagent kit 31 or the second reagent kit 32 to ensure mixing (step S20) includes:
S21: when the flow path selection valve 20 communicates the first reagent kit 31 with the pump 10 or the second reagent kit 32 with the pump 10, using the pump 10 to repeatedly aspirate the mixed reagent in the first reagent kit 31 or the second reagent kit 32 at a fourth speed and pump the mixed reagent back into the first reagent kit 31 or the second reagent kit 32 at a fifth speed.

First, the common valve port 23 may be controlled to be in communication with the first valve port 21 to allow the pump 10 to be in communication with the first reagent kit 31; then, the pump 10 may be controlled to aspirate the mixed reagent in the first reagent kit 31 at the fourth speed, followed by standing for several seconds; then, the pump 10 may be controlled to pump the mixed reagent back into the first reagent kit 31 at the fifth speed, followed by standing for several seconds; next, the pump 10 may be controlled to aspirate the mixed reagent in the first reagent kit 31 at the fourth speed, followed by standing for several seconds; then, the pump 10 may be controlled to pump the mixed reagent back into the first reagent kit 31 at the fifth speed, followed by standing for several seconds. The process is repeated. The number of repetitions may be designed based on physical and chemical properties and dosage of the first reagent and the second reagent.

Similarly, first, the common valve port 23 may be controlled to be in communication with the second valve port 22 to allow the pump 10 to be in communication with the second reagent kit 32; then, the pump 10 may be controlled to aspirate the mixed reagent in the second reagent kit 32 at the fourth speed, followed by standing for several seconds; then, the pump 10 may be controlled to pump the mixed reagent back into the second reagent kit 32 at the fifth speed, followed by standing for several seconds; next, the pump 10 may be controlled to aspirate the mixed reagent in the second reagent kit 32 at the fourth speed, followed by standing for several seconds; then, the pump 10 may be controlled to pump the mixed reagent back into the second reagent kit 32 at the fifth speed, followed by standing for several seconds. The process is repeated. The number of repetitions may be designed based on physical and chemical properties and dosage of the first reagent and the second reagent.

In some embodiments, using the pump 10 to aspirate the first reagent and the second reagent from the first reagent kit 31 and the second reagent kit 32 respectively includes:
using the pump 10 to aspirate the first reagent from the first reagent kit 31 by means of the first aspiration assembly 41, and
using the pump 10 to aspirate the second reagent from the second reagent kit 32 by means of the second aspiration assembly 42;
using the pump 10 to move the mixed reagent in the first reagent kit 31 or the second reagent kit 32 to ensure mixing (step S20) includes:
   using the pump 10 to move the mixed reagent in the first reagent kit 31 by means of the first aspiration assembly 41 to ensure mixing, or
   using the pump 10 to move the mixed reagent in the second reagent kit 32 by means of the second aspiration assembly 42 to ensure mixing.

First, the common valve port 23 may be controlled to be in communication with the first valve port 21 to allow the first aspiration assembly 41 to be in communication with the pump 10; then, the pump 10 may be controlled to aspirate the first reagent from the first reagent kit 31 by means of the first aspiration assembly 41, followed by standing for several seconds; next, the common valve port 23 may be controlled to be in communication with the second valve port 22 to allow the second aspiration assembly 42 to be in communication with the pump 10; then, the pump 10 may be controlled to aspirate the second reagent from the second reagent kit 32 by means of the second aspiration assembly 42.

Similarly, first, the common valve port 23 may be controlled to be in communication with the second valve port 22 to allow the second aspiration assembly 42 to be in communication with the pump 10; then, the pump 10 may be controlled to aspirate the second reagent from the second reagent kit 32 by means of the second aspiration assembly 42, followed by standing for several seconds; next, the common valve port 23 may be controlled to be in communication with the first valve port 21 to allow the first aspiration assembly 41 to be in communication with the pump 10; then, the pump 10 may be controlled to aspirate the first reagent from the first reagent kit 31 by means of the first aspiration assembly 41.

First, the common valve port 23 may be controlled to be in communication with the first valve port 21 to allow the first aspiration assembly 41 to be in communication with the pump 10; then, the pump 10 may be controlled to move the mixed reagents in the first reagent kit 31 by means of the first aspiration assembly 41 to ensure mixing. Alternatively, first, the common valve port 23 may be controlled to be in communication with the second valve port 22 to allow the second aspiration assembly 42 to be in communication with the pump 10; then, the pump 10 may be controlled to move the mixed reagents in the second reagent kit 32 by means of the second aspiration assembly 42 to ensure mixing.

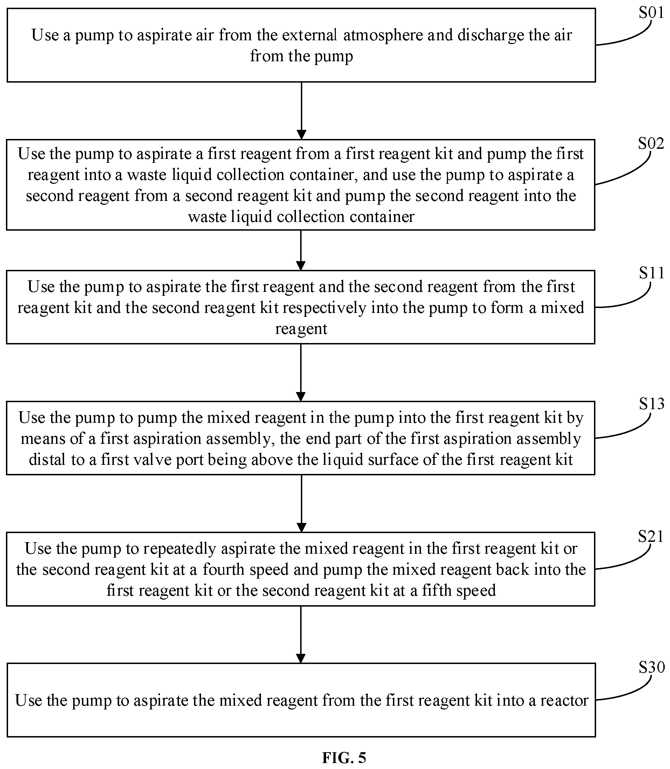

Referring to FIG. 5, in some embodiments, using the pump 10 to pump the mixed reagent into the first reagent kit 31 or the second reagent kit 32 (step S12) includes:
S13: using the pump 10 to pump the mixed reagent in the pump 10 into the first reagent kit 31 by means of the first aspiration assembly 41, where the end part of the first aspiration assembly 41 distal to the first valve port 21 is above the liquid surface of the first reagent kit 31.

First, the end part of the first aspiration assembly 41 distal to the first valve port 21 may be arranged above the liquid surface of the first reagent kit 31; then, the common valve port 23 may be controlled to be in communication with the first valve port 21; finally, the pump 10 may be controlled to pump the mixed reagent in the pump 10 into the first reagent kit 31. Alternatively, first, the common valve port 23 may be controlled to be in communication with the first valve port 21; then, the end part of the first aspiration assembly 41 distal to the first valve port 21 may be arranged above the liquid surface of the first reagent kit 31; finally, the pump 10 may be controlled to pump the mixed reagent in the pump 10 into the first reagent kit 31.

In some embodiments, using the pump 10 to pump the mixed reagent in the pump 10 into the first reagent kit 31 at the third speed includes:
pumping liquid multiple times at different liquid levels by the end part of the first aspiration assembly 41 distal to the first valve port 21 when the pump 10 pumps the mixed reagent in the pump 10 into the first reagent kit 31 by means of the first aspiration assembly 41.

This is conducive to improving the diffusion capacity of the mixed reagent in the first reagent kit 31, so that the mixed reagent is uniformly mixed with the first reagent in the first reagent kit 31.

The first aspiration assembly 41 may be stationary when the mixed reagent in the pump 10 flows to the first reagent kit 31. Exemplarily, the end part of the first aspiration assembly 41 distal to the first valve port 21 is first adjusted to a different liquid level, and the pump 10 is then controlled to pump the mixed reagent in the pump 10 into the first reagent kit 31 by means of the first aspiration assembly 41.

The first aspiration assembly 41 may be dynamic when the mixed reagent in the pump 10 flows to the first reagent kit 31. Exemplarily, while the pump 10 pumps the mixed reagent in the pump 10 into the first reagent kit 31 by means of the first aspiration assembly 41, the end part of the first aspiration assembly 41 distal to the first valve port 21 is controlled to move in the first reagent kit 31 in the height direction of the liquid surface.

In some embodiments, using the pump 10 to pump the mixed reagent in the pump 10 into the first reagent kit 31 at the third speed includes:
in the case of the liquid level of the first reagent kit 31 being H, using the pump 10 to pump the mixed reagent in the pump 10 into the first reagent kit 31 by means of the first aspiration assembly 41 when the end part of the first aspiration assembly 41 distal to the first valve port 21 is positioned at liquid levels of 0 to 1/3H, 1/3H to 2/3H, and 2/3H to H separately, a liquid pumping height at the end part of the first aspiration assembly 41 being not 0 during liquid pumping.

Exemplarily, first, the liquid pumping height at the end part of the first aspiration assembly 41 is controlled to be 1/6H, and then, the pump 10 is controlled to pump the mixed reagent in the pump 10 into the first reagent kit 31 by means of the first aspiration assembly 41; next, the liquid pumping height at the end part of the first aspiration assembly 41 is controlled to be 1/2H, and then, the pump 10 is controlled to pump the mixed reagent in the pump 10 into the first reagent kit 31 by means of the first aspiration assembly 41; finally, the liquid pumping height at the end part of the first aspiration assembly 41 is controlled to be 5/6H, and then, the pump 10 is controlled to pump the mixed reagent in the pump 10 into the first reagent kit 31 by means of the first aspiration assembly 41. Alternatively, first, the liquid pumping height at the end part of the first aspiration assembly 41 is controlled to be 5/6H, and then, the pump 10 is controlled to pump the mixed reagent in the pump 10 into the first reagent kit 31 by means of the first aspiration assembly 41; next, the liquid pumping height at the end part of the first aspiration assembly 41 is controlled to be 1/2H, and then, the pump 10 is controlled to pump the mixed reagent in the pump 10 into the first reagent kit 31 by means of the first aspiration assembly 41; finally, the liquid pumping height at the end part of the first aspiration assembly 41 is controlled to be 1/6H, and then, the pump 10 is controlled to pump the mixed reagent in the pump 10 into the first reagent kit 31 by means of the first aspiration assembly 41.

The amounts of the mixed reagents pumped into the first reagent kit 31 at different liquid levels may be the same or different.

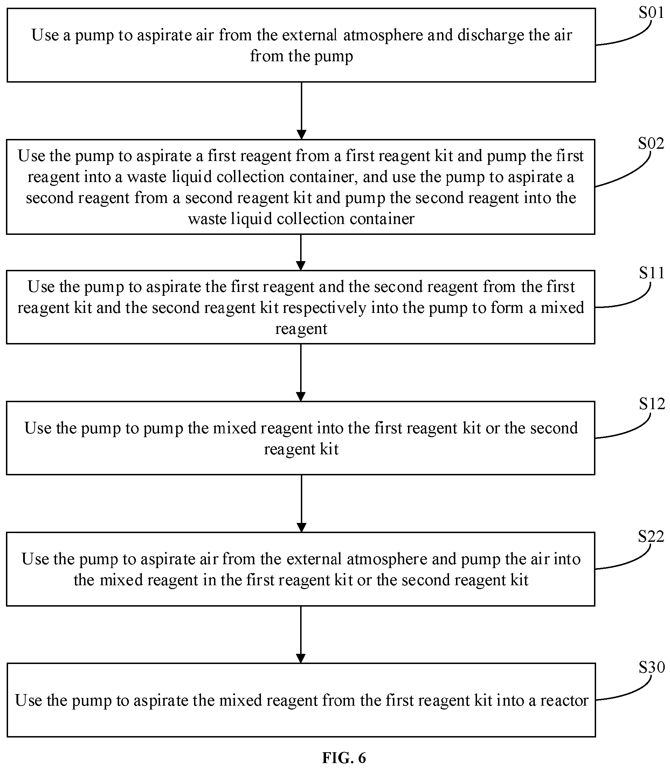

Referring to FIG. 6, in some embodiments, using the pump 10 to move the mixed reagent in the first reagent kit 31 or the second reagent kit 32 to ensure mixing (step S20) includes:
S22: using the pump 10 to aspirate air from the external atmosphere and pump the air into the mixed reagent in the first reagent kit 31 or the second reagent kit 32.

First, the third valve port 24 may be controlled to be in communication with the common valve port 23 to allow the pump 10 to be in communication with the external atmosphere; then, the pump 10 may be controlled to aspirate air from the external atmosphere, followed by standing for several seconds, for example, 4 s; next, the first valve port 21 or the second valve port 22 may be controlled to be in communication with the common valve port 23 to allow the first aspiration assembly 41 or the second aspiration assembly 42 to be in communication with the pump 10; then, the pump 10 may be controlled to pump the air into the mixed reagent in the first reagent kit 31 or the second reagent kit 32.

By pumping air into the first reagent kit 31 or the second reagent kit 32, the movement of the mixed reagent in the first reagent kit 31 or the second reagent kit 32 can be accelerated to uniformly mix the first reagent and the second reagent.

In some embodiments, the method includes:
using the pump 10 to aspirate the mixed reagent from the first reagent kit 31 into the reactor 80 when the flow path selection valve 20 and the switching valve 70 communicate the first reagent kit 31 with the pump 10.

First, the flow path selection valve 20 and the switching valve 70 may be controlled to allow the first aspiration assembly 41 to be in communication with the switching valve 70, and the third conduit 62 to be in communication with the second conduit 61; then, the pump 10 may be controlled to aspirate all of the mixed reagent from the first reagent kit 31 into the reactor 80.

In this way, the first reagent and the second reagent can be uniformly mixed without passing through the reactor 80 and the second conduit 61, and the first reagent and the second reagent can enter the reactor 80 for biochemical reactions after being uniformly mixed, thereby reducing the risk of the performance of the first reagent being weakened due to the consumption of components or long-term exposure to the air after the first reagent and the second reagent are uniformly mixed.

Referring to FIG. 4, in one embodiment, the pump 10 is used to first aspirate air from the external atmosphere and discharge the air from the pump 10; then aspirate the first reagent from the first reagent kit 31 and pump the first reagent into the waste liquid collection container 50, and aspirate the second reagent from the second reagent kit 32 and pump the second reagent into the waste liquid collection container 50; next aspirate the first reagent from the first reagent kit 31 into the pump 10 at a first speed, and aspirate the second reagent from the second reagent kit 32 into the pump 10 at a second speed to mix the first reagent and the second reagent to form a mixed reagent; then pump the mixed reagent in the pump 10 into the first reagent kit 31 at a third speed; and next repeatedly aspirate the mixed reagent in the first reagent kit 31 at a fourth speed, and pump the mixed reagent back into the first reagent kit 31 at a fifth speed to uniformly mix the first reagent and the second reagent in the first reagent kit 31.

Exemplarily, the first reagent is 100 mL of PBS, and the second reagent is a 1000 µM nucleotide stock solution.

The pump 10 was used to first aspirate 1000 µL of air from the external atmosphere at a speed S1 and discharge the air from the pump 10, followed by standing for 2 s; then aspirate 500 µL of the first reagent from the first reagent kit 31 at a speed S2 and pump the first reagent into the waste liquid collection container 50, followed by standing for 2 s; then aspirate 500 µL of the second reagent from the second reagent kit 32 at the speed S2 and pump the second reagent into the waste liquid collection container 50, followed by standing for 2 s; next aspirate 500 µL of the first reagent from the first reagent kit 31 into the pump 10 at the speed S2, followed by standing for 2 s; then aspirate 250 µL of the second reagent from the second reagent kit 32 into the pump 10 at a speed S3, followed by standing for 4 s, so that the first reagent and the second reagent were mixed to form a mixed reagent; then pump 750 µL of the mixed reagent in the pump 10 into the first reagent kit 31 at the speed S3, followed by standing for 4 s; next repeatedly aspirate 500 µL of the mixed reagent in the first reagent kit 31 at the speed S2, followed by standing for 4 s; and then pump 500 µL of the mixed reagent back into the first reagent kit 31 at the speed S2, followed by standing for 4 s. Finally, the reagents in the upper, middle, and lower sections of the reagent in the first reagent kit 31 were separately drawn, and their concentrations were separately measured by HPLC to determine the degree of mixing of the first reagent and the second reagent. The speed S2 is greater than the speed S3 and less than the speed S1.

The experimental data are shown in Table 1 below:

**Table 1:**

| Number of cycles | 2 | 4 | 6 | 12 | 14 | Theory |
|---|---|---|---|---|---|---|
| Concentration (upper section of reagent) µM | 5.13 | 7.54 | 8.87 | 9.72 | 9.81 | 9.90 |
| Concentration (middle section of reagent) µM | 7.82 | 8.77 | 9.56 | 9.79 | 9.82 | 9.90 |
| Concentration (lower section of reagent) µM | 12.56 | 10.66 | 10.12 | 9.88 | 9.83 | 9.90 |

As shown in Table 1: when 500 µL of the mixed reagent was repeatedly aspirated and pumped twice, the concentrations of nucleotides in the upper, middle, and lower sections of the reagent of the first reagent kit 31 were measured to be 5.13 µM, 7.82 µM, and 12.56 µM, respectively; when 500 µL of the mixed reagent was repeatedly aspirated and pumped 4 times, the concentrations of nucleotides in the upper, middle, and lower sections of the liquid surface of the first reagent kit 31 were measured to be 7.54 µM, 8.77 µM, and 10.66 µM, respectively; when 500 µL of the mixed reagent was repeatedly aspirated and pumped 6 times, the concentrations of nucleotides in the upper, middle, and lower sections of the liquid surface of the first reagent kit 31 were measured to be 8.87 µM, 9.56 µM, and 10.12 µM, respectively; when 500 µL of the mixed reagent was repeatedly aspirated and pumped 12 times, the concentrations of nucleotides in the upper, middle, and lower sections of the liquid surface of the first reagent kit 31 were measured to be 9.72 µM, 9.79 µM, and 9.88 µM, respectively; when 500 µL of the mixed reagent was repeatedly aspirated and pumped 14 times, the concentrations of nucleotides in the upper, middle, and lower sections of the liquid surface of the first reagent kit 31 were measured to be 9.81 µM, 9.82 µM, and 9.83 µM, respectively. Since the theoretical values of the concentrations of the nucleotides in the upper, middle, and lower sections of the mixed reagent are all 9.90 µM, it can be seen that as the number of liquid pumping cycles increases, the mixing uniformity of the first reagent and the second reagent in the first reagent kit 31 is significantly improved. After 500 µL of the mixed reagent was repeatedly aspirated and pumped for 14 cycles, a substantially uniformly mixed state was achieved.

The speed S2 at which 500 µL of the mixed reagent was pumped back into the first reagent kit 31 was adjusted to the speed S3 for testing. The experimental data are shown in Table 2 below:

**Table 2:**

| Number of cycles | 2 | 6 | 10 | 16 | 20 | Theory |
|---|---|---|---|---|---|---|
| Concentration (upper section of reagent) µM | 4.35 | 5.41 | 7.27 | 8.72 | 9.21 | 9.90 |
| Concentration (middle section of reagent) µM | 6.22 | 7.66 | 8.26 | 9.59 | 9.42 | 9.90 |
| Concentration (lower section of reagent) µM | 12.69 | 12.36 | 11.72 | 10.84 | 10.21 | 9.90 |

As shown in Table 2: when 500 µL of the mixed reagent was repeatedly aspirated and pumped twice, the concentrations of nucleotides in the upper, middle, and lower sections of the liquid surface of the first reagent kit 31 were measured to be 4.35 µM, 6.22 µM, and 12.69 µM, respectively; when 500 µL of the mixed reagent was repeatedly aspirated and pumped 6 times, the concentrations of nucleotides in the upper, middle, and lower sections of the liquid surface of the first reagent kit 31 were measured to be 5.41 µM, 7.66 µM, and 12.36 µM, respectively; when 500 µL of the mixed reagent was repeatedly aspirated and pumped 10 times, the concentrations of nucleotides in the upper, middle, and lower sections of the liquid surface of the first reagent kit 31 were measured to be 7.27 µM, 8.26 µM, and 11.72 µM, respectively; when 500 µL of the mixed reagent was repeatedly aspirated and pumped 16 times, the concentrations of nucleotides in the upper, middle, and lower sections of the liquid surface of the first reagent kit 31 were measured to be 8.72 µM, 9.59 µM, and 10.84 µM, respectively; when 500 µL of the mixed reagent was repeatedly aspirated and pumped 20 times, the concentrations of nucleotides in the upper, middle, and lower sections of the liquid surface of the first reagent kit 31 were measured to be 9.21 µM, 9.42 µM, and 10.21 µM, respectively. Since the theoretical values of the concentrations of the nucleotides in the upper, middle, and lower sections of the mixed reagent are all 9.90 µM, it can be seen that when 500 µL of the mixed reagent is repeatedly aspirated and pumped 20 times, the first reagent and the second reagent cannot be mixed uniformly in the first reagent kit 31. It can be seen that after adjusting the speed at which 500 µL of the mixed reagent is pumped back into the first reagent kit 31, the uniformity of the mixed solution achieved for the same number of cycles is reduced.

Referring to FIG. 5, in another embodiment, the pump 10 is used to first aspirate air from the external atmosphere and discharge the air from the pump 10; then aspirate the first reagent from the first reagent kit 31 and pump the first reagent into the waste liquid collection container 50, and aspirate the second reagent from the second reagent kit 32 and pump the second reagent into the waste liquid collection container 50; and next aspirate the first reagent from the first reagent kit 31 into the pump 10 at a first speed, and aspirate the second reagent from the second reagent kit 32 into the pump 10 at a second speed to mix the first reagent and the second reagent to form a mixed reagent. Then, the end part of the first aspiration assembly 41 distal to the first valve port 21 is arranged above the liquid surface of the first reagent kit 31 or sequentially arranged at different liquid levels. The pump is used to pump the mixed reagent in the pump 10 into the first reagent kit 31 at a third speed; and next repeatedly aspirate the mixed reagent in the first reagent kit 31 at a fourth speed, and pump the mixed reagent back into the first reagent kit 31 at a fifth speed to uniformly mix the first reagent and the second reagent in the first reagent kit 31.

Exemplarily, the first reagent is 100 mL of PBS, and the second reagent is a 1000 µM nucleotide stock solution. The pump 10 was used to first aspirate 1000 µL of air from the external atmosphere at a speed S1 and discharge the air from the pump 10, followed by standing for 2 s; then aspirate 500 µL of the first reagent from the first reagent kit 31 at a speed S2 and pump the first reagent into the waste liquid collection container 50, followed by standing for 2 s; then aspirate 500 µL of the second reagent from the second reagent kit 32 at the speed S2 and pump the second reagent into the waste liquid collection container 50, followed by standing for 2 s; next aspirate 500 µL of the first reagent from the first reagent kit 31 into the pump 10 at the speed S2, followed by standing for 2 s; and then aspirate 250 µL of the second reagent from the second reagent kit 32 into the pump 10 at a speed S3, followed by standing for 4 s, so that the first reagent and the second reagent were mixed to form a mixed reagent. Then, the end part of the first aspiration assembly 41 distal to the first valve port 21 was arranged above the liquid surface of the first reagent kit 31 or at a liquid level of 1/2H. The pump was used to pump 750 µL of the mixed reagent in the pump 10 into the first reagent kit 31 at the speed S3, followed by standing for 4 s; next repeatedly aspirate 500 µL of the mixed reagent in the first reagent kit 31 at the speed S2, followed by standing for 4 s; and then pump 500 µL of the mixed reagent back into the first reagent kit 31 at the speed S2, followed by standing for 4 s. Finally, the reagents in the upper, middle, and lower sections of the reagent in the first reagent kit 31 were separately drawn, and the concentration of nucleotides in the first reagent kit 31 was measured by HPLC to determine the degree of mixing of the first reagent and the second reagent. The speed S2 is greater than the speed S3 and less than the speed S1.

The end part of the first aspiration assembly 41 distal to the first valve port 21 was arranged above the liquid surface of the first reagent kit 31 for testing. The experimental data are shown in Table 3 below:

**Table 3:**

| Number of cycles | 2 | 4 | 6 | 8 | 10 | Theory |
|---|---|---|---|---|---|---|
| Concentration (upper section of reagent) µM | 7.87 | 8.81 | 9.79 | 9.83 | 9.82 | 9.90 |
| Concentration (middle section of reagent) µM | 8.56 | 9.23 | 9.8 | 9.82 | 9.83 | 9.90 |
| Concentration (lower section of reagent) µM | 10.38 | 10.25 | 9.87 | 9.85 | 9.85 | 9.90 |

As shown in Table 3: when 500 µL of the mixed reagent was repeatedly aspirated and pumped twice, the concentrations of nucleotides in the upper, middle, and lower sections of the liquid surface of the first reagent kit 31 were measured to be 7.87 µM, 8.56 µM, and 10.38 µM, respectively; when 500 µL of the mixed reagent was repeatedly aspirated and pumped 4 times, the concentrations of nucleotides in the upper, middle, and lower sections of the liquid surface of the first reagent kit 31 were measured to be 8.81 µM, 9.23 µM, and 10.25 µM, respectively; when 500 µL of the mixed reagent was repeatedly aspirated and pumped 6 times, the concentrations of nucleotides in the upper, middle, and lower sections of the liquid surface of the first reagent kit 31 were measured to be 9.79 µM, 9.8 µM, and 9.87 µM, respectively; when 500 µL of the mixed reagent was repeatedly aspirated and pumped 8 times, the concentrations of nucleotides in the upper, middle, and lower sections of the liquid surface of the first reagent kit 31 were measured to be 9.83 µM, 9.82 µM, and 9.85 µM, respectively; when 500 µL of the mixed reagent was repeatedly aspirated and pumped 10 times, the concentrations of nucleotides in the upper, middle, and lower sections of the liquid surface of the first reagent kit 31 were measured to be 9.82 µM, 9.83 µM, and 9.85 µM, respectively. Since the theoretical values of the concentrations of the nucleotides in the upper, middle, and lower sections of the mixed reagent are all 9.90 µM, it can be seen that when 500 µL of the mixed reagent is repeatedly aspirated and pumped 8 times or more, the first reagent and the second reagent can be mixed uniformly in the first reagent kit 31.

The end part of the first aspiration assembly 41 distal to the first valve port 21 was arranged at a liquid level of 1/2H in the first reagent kit 31. The experimental data are shown in Table 4 below:

**Table 4:**

| Number of cycles | 2 | 6 | 8 | 10 | 12 | Theory |
|---|---|---|---|---|---|---|
| Concentration (upper section of reagent) µM | 5.87 | 8.88 | 9.53 | 9.81 | 9.83 | 9.90 |
| Concentration (middle section of reagent) µM | 8.86 | 9.40 | 9.71 | 9.83 | 9.83 | 9.90 |
| Concentration (lower section of reagent) µM | 10.54 | 10.07 | 9.95 | 9.85 | 9.84 | 9.90 |

As shown in Table 4: when 500 µL of the mixed reagent was repeatedly aspirated and pumped twice, the concentrations of nucleotides in the upper, middle, and lower sections of the liquid surface of the first reagent kit 31 were measured to be 5.87 µM, 8.86 µM, and 10.54 µM, respectively; when 500 µL of the mixed reagent was repeatedly aspirated and pumped 6 times, the concentrations of nucleotides in the upper, middle, and lower sections of the liquid surface of the first reagent kit 31 were measured to be 8.88 µM, 9.40 µM, and 10.07 µM, respectively; when 500 µL of the mixed reagent was repeatedly aspirated and pumped 8 times, the concentrations of nucleotides in the upper, middle, and lower sections of the liquid surface of the first reagent kit 31 were measured to be 9.53 µM, 9.71 µM, and 9.95 µM, respectively; when 500 µL of the mixed reagent was repeatedly aspirated and pumped 10 times, the concentrations of nucleotides in the upper, middle, and lower sections of the liquid surface of the first reagent kit 31 were measured to be 9.81 µM, 9.83 µM, and 9.85 µM, respectively; when 500 µL of the mixed reagent was repeatedly aspirated and pumped 12 times, the concentrations of nucleotides in the upper, middle, and lower sections of the liquid surface of the first reagent kit 31 were measured to be 9.83 µM, 9.83 µM, and 9.84 µM, respectively. Since the theoretical values of the concentrations of the nucleotides in the upper, middle, and lower sections of the mixed reagent are all 9.90 µM, it can be seen that when 500 µL of the mixed reagent is repeatedly aspirated and pumped 10 times or more, the first reagent and the second reagent can be mixed uniformly in the first reagent kit 31.

Referring to FIG. 6, in yet another embodiment, the pump 10 is used to first aspirate air from the external atmosphere and discharge the air from the pump 10; then aspirate the first reagent from the first reagent kit 31 and pump the first reagent into the waste liquid collection container 50, and aspirate the second reagent from the second reagent kit 32 and pump the second reagent into the waste liquid collection container 50; next aspirate the first reagent from the first reagent kit 31 into the pump 10 at a first speed, and aspirate the second reagent from the second reagent kit 32 into the pump 10 at a second speed to mix the first reagent and the second reagent to form a mixed reagent; then pump the mixed reagent in the pump 10 into the first reagent kit 31 at a third speed; and next repeatedly aspirate air from the external atmosphere, and pump the air into the mixed reagent in the first reagent kit 31 to uniformly mix the first reagent and the second reagent in the first reagent kit 31.

Exemplarily, the first reagent is 100 mL of PBS, and the second reagent is a 1000 µM nucleotide stock solution. The pump 10 was used to first aspirate 1000 µL of air from the external atmosphere at a speed S1 and discharge the air from the pump 10, followed by standing for 2 s; then aspirate 500 µL of the first reagent from the first reagent kit 31 at a speed S2 and pump the first reagent into the waste liquid collection container 50, followed by standing for 2 s; then aspirate 500 µL of the second reagent from the second reagent kit 32 at the speed S2 and pump the second reagent into the waste liquid collection container 50, followed by standing for 2 s; next aspirate 500 µL of the first reagent from the first reagent kit 31 into the pump 10 at the speed S2, followed by standing for 2 s; then aspirate 250 µL of the second reagent from the second reagent kit 32 into the pump 10 at a speed S3, followed by standing for 4 s, so that the first reagent and the second reagent were mixed to form a mixed reagent; then pump 750 µL of the mixed reagent in the pump 10 into the first reagent kit 31 at the speed S3, followed by standing for 4 s; next repeatedly aspirate 1000 µL of air from the external atmosphere at the speed S1, followed by standing for 4 s; and then pump 1000 µL of the air into the mixed reagent in the first reagent kit 31 at the speed S1, followed by standing for 4 s. Finally, the reagents in the upper, middle, and lower sections of the reagent in the first reagent kit 31 were separately drawn, and the concentration of nucleotides in the first reagent kit 31 was measured by HPLC to determine the degree of mixing of the first reagent and the second reagent. The speed S2 is greater than the speed S3 and less than the speed S1.

The experimental data is shown in Table 5 below:

**Table 5:**

| Number of cycles | 2 | 4 | 6 | 8 | 10 | Theory |
|---|---|---|---|---|---|---|
| Concentration (upper section of reagent) µM | 8.87 | 9.65 | 9.82 | 9.83 | 9.83 | 9.90 |
| Concentration (middle section of reagent) µM | 9.56 | 9.75 | 9.83 | 9.83 | 9.83 | 9.90 |
| Concentration (lower section of reagent) µM | 10.12 | 9.8 | 9.85 | 9.82 | 9.82 | 9.90 |

As shown in Table 5: when 500 µL of the mixed reagent was repeatedly aspirated and pumped twice, the concentrations of nucleotides in the upper, middle, and lower sections of the liquid surface of the first reagent kit 31 were measured to be 8.87 µM, 9.56 µM, and 10.12 µM, respectively; when 500 µL of the mixed reagent was repeatedly aspirated and pumped 4 times, the concentrations of nucleotides in the upper, middle, and lower sections of the liquid surface of the first reagent kit 31 were measured to be 9.65 µM, 9.75 µM, and 9.8 µM, respectively; when 500 µL of the mixed reagent was repeatedly aspirated and pumped 6 times, the concentrations of nucleotides in the upper, middle, and lower sections of the liquid surface of the first reagent kit 31 were measured to be 9.82 µM, 9.83 µM, and 9.85 µM, respectively; when 500 µL of the mixed reagent was repeatedly aspirated and pumped 8 times, the concentrations of nucleotides in the upper, middle, and lower sections of the liquid surface of the first reagent kit 31 were measured to be 9.83 µM, 9.83 µM, and 9.82 µM, respectively; when 500 µL of the mixed reagent was repeatedly aspirated and pumped 10 times, the concentrations of nucleotides in the upper, middle, and lower sections of the liquid surface of the first reagent kit 31 were measured to be 9.83 µM, 9.83 µM, and 9.82 µM, respectively. Since the theoretical values of the concentrations of the nucleotides in the upper, middle, and lower sections of the mixed reagent are all 9.90 µM, it can be seen that when 1000 µL of air is repeatedly aspirated and pumped 6 times or more, the first reagent and the second reagent can be mixed uniformly in the first reagent kit 31.

In the description of the specification, references to the terms such as "an embodiment", "some embodiments", "schematic embodiments", "examples", "specific examples", or "some examples" mean that the specific feature, structure, material, or characteristic described in connection with the embodiment or example is included in at least one embodiment or example of the present disclosure. In the specification, the schematic description of the above terms does not necessarily refer to the same embodiment or example. Moreover, the particular features, structures, materials, or characteristics described may be combined in any one or more embodiments or examples in any appropriate manner.

Although the embodiments of the present disclosure have been illustrated and described, it can be understood by those of ordinary skill in the art that various changes, modifications, replacements, and variations can be made to these embodiments without departing from the principle and purpose of the present disclosure, and the scope of the present disclosure is defined by the claims and equivalents thereof.

## Claims

1. A liquid path system, comprising a pump and a flow path selection valve,
the flow path selection valve comprising a plurality of valve ports that are not capable of being communicated simultaneously, the plurality of valve ports being respectively configured to communicate different reagent kits with the pump, the plurality of valve ports at least comprising a first valve port and a second valve port, the first valve port being configured to communicate a first reagent kit with the pump, and the second valve port being configured to communicate a second reagent kit with the pump, wherein the first reagent kit is configured to store a first reagent, the second reagent kit is configured to store a second reagent, and the first reagent is different from the second reagent;
the pump is configured to aspirate the first reagent and the second reagent from the first reagent kit and the second reagent kit respectively, mix the first reagent and the second reagent to form a mixed reagent, and move the mixed reagent in the first reagent kit or the second reagent kit to ensure uniform mixing.

2. The liquid path system according to claim 1, wherein the pump is configured to aspirate the first reagent and the second reagent from the first reagent kit and the second reagent kit respectively into the pump to form the mixed reagent, and to pump the mixed reagent into the first reagent kit or the second reagent kit.

3. The liquid path system according to claim 2, wherein a volume of the first reagent in the first reagent kit is less than or equal to a volume of the first reagent required for a single biochemical reaction run, a volume of the second reagent in the second reagent kit is greater than or equal to a volume of the second reagent required for the single biochemical reaction run, and the pump is configured to pump the mixed reagent into the first reagent kit;
optionally, wherein the volume of the first reagent required for the single biochemical reaction run is 5 times or more the volume of the second reagent required.

4. The liquid path system according to claim 3, wherein the pump is configured to aspirate a part of the first reagent from the first reagent kit into the pump, and the pump is further configured to aspirate all of the second reagent from the second reagent kit into the pump to form the mixed reagent, and to pump the mixed reagent back into the first reagent kit.

5. The liquid path system according to any one of claims 1 to 4, wherein when the flow path selection valve communicates the first reagent kit with the pump, the pump is configured to aspirate the first reagent from the first reagent kit into the pump at a first speed; when the flow path selection valve communicates the second reagent kit with the pump, the pump is configured to aspirate the second reagent from the second reagent kit into the pump at a second speed, so that the first reagent and the second reagent are mixed to form the mixed reagent, the first speed being the same as or different from the second speed.

6. The liquid path system according to claim 5, wherein the first reagent and the second reagent satisfy at least one of the following conditions:
a) a density of the first reagent is less than a density of the second reagent,
b) a viscosity of the first reagent is less than a viscosity of the second reagent, and
c) a diffusion coefficient of the first reagent is less than a diffusion coefficient of the second reagent, the second speed being less than the first speed.

7. The liquid path system according to any one of claims 1 to 6, wherein when the flow path selection valve communicates the first reagent kit with the pump, the pump is configured to pump the mixed reagent in the pump into the first reagent kit at a third speed.

8. The liquid path system according to claim 7, comprising a first aspiration assembly and a second aspiration assembly in communication with the first valve port and the second valve port respectively, the first aspiration assembly being configured to aspirate the first reagent from the first reagent kit and return the mixed reagent to the first reagent kit via the first valve port, and the second aspiration assembly being configured to aspirate the second reagent from the second reagent kit;
optionally, wherein when the pump pumps the mixed reagent in the pump into the first reagent kit by means of the first aspiration assembly, an end part of the first aspiration assembly distal to the first valve port is above a liquid surface of the first reagent kit;
optionally, wherein when the pump pumps the mixed reagent in the pump into the first reagent kit by means of the first aspiration assembly, an end part of the first aspiration assembly distal to the first valve port pumps liquid multiple times at different liquid levels.

9. The liquid path system according to claim 8, wherein a liquid level of the first reagent kit is H, and when the pump pumps the mixed reagent in the pump into the first reagent kit by means of the first aspiration assembly, the end part of the first aspiration assembly distal to the first valve port pumps liquid at liquid levels of 0 to 1/3H, 1/3H to 2/3H, and 2/3H to H separately, and a liquid pumping height at the end part of the first aspiration assembly is not 0 during liquid pumping.

10. The liquid path system according to any one of claims 1 to 9, wherein when the flow path selection valve communicates the first reagent kit with the pump, the pump is configured to repeatedly aspirate the mixed reagent in the first reagent kit at a fourth speed and pump the mixed reagent back into the first reagent kit at a fifth speed.

11. The liquid path system according to any one of claims 1 to 10, wherein the plurality of valve ports further comprise a third valve port for communicating an external atmosphere with the pump, and the pump is further configured to aspirate air from the external atmosphere into the pump;
optionally, wherein the flow path selection valve is capable of selectively communicating an external atmosphere with the pump, and the pump is further configured to aspirate air from the external atmosphere and pump the air into the mixed reagent in the first reagent kit;
optionally, wherein when the flow path selection valve communicates an external atmosphere with the pump, the pump is configured to aspirate air from the external atmosphere and discharge the air from the pump before the first reagent and the second reagent are drawn.

12. The liquid path system according to any one of claims 1 to 11, comprising a waste liquid collection container in communication with the pump, wherein before the first reagent and the second reagent form the mixed reagent, the pump is configured to aspirate the first reagent from the first reagent kit and pump the first reagent into the waste liquid collection container, and is configured to aspirate the second reagent from the second reagent kit and pump the second reagent into the waste liquid collection container.

13. The liquid path system according to any one of claims 1 to 12, comprising a first conduit, a second conduit, a third conduit, a switching valve, and a reactor, the first conduit and the second conduit being both connected to the switching valve and the pump, the third conduit being connected to the flow path selection valve and the switching valve, the reactor being arranged on the second conduit, and the switching valve selectively communicating the third conduit with the first conduit or communicating the third conduit with the second conduit.

14. The liquid path system according to claim 13, wherein when the flow path selection valve and the switching valve communicate the first reagent kit with the pump, the pump is configured to aspirate the mixed reagent from the first reagent kit into the reactor.

15. The liquid path system according to claim 14, wherein the switching valve comprises a first port, a second port, and a third port, the first port being configured to be in communication with the third conduit, the second port being configured to be in communication with the first conduit, the third port being configured to be in communication with the second conduit, and the first port being selectively in communication with the second port and the third port.
